# EUROPEAN PATENT SPECIFICATION

(11) **EP 1 918 127 B1**
(45) Date of publication and mention of the grant of the patent: **29.08.2012**
(21) Application number: 07019904.7
(22) Date of filing: 11.10.2007
(51) Int. Cl.: B60B 33/00

(54) **Trolley wheel with locking support**
Einkaufswagenrad mit Sperrstütze
Roue de chariot avec support de verrouillage

(30) Priority: 31.10.2006 IT MI20062090
(43) Date of publication of application: 07.05.2008
(73) Proprietor: Luigi Perego S.R.L., 20088 Rosate (Milano) (IT)
(72) Inventor: Perego, Alessandro, 20155 Milano (IT)
(74) Representative: Petruzziello, Aldo

(56) References cited:
- EP-A1- 0 373 398
- EP-A1- 0 633 151
- EP-A2- 1 533 139
- DE-B1- 2 656 322
- KR-A- 20010 068 007

## Description

The present invention refers to a wheel, particularly for trolleys, such as, for example, shopping trolleys for shopping centres or luggage trolleys for airports, stations and the like.

One-way wheels or castor wheels which in any case can be locked in position to become one-way wheels are provided for movement of said types of trolleys.

Reference will be made hereunder mainly to castor wheels, it being understood in any case that the invention also applies to non-castor wheels. A castor wheel, or articulated wheel or swivel wheel, has a rolling body freely rotatable around a substantially horizontal axis of rotation carried by a fork freely rotatable around a substantially vertical axis.

Various types of articulated wheels for trolleys are known to the art; however, in the specific case reference will be made to a type of wheel adapted to engage in special grooves made on conveyor belts or escalators that are present in supermarkets, shopping centres and, in general whenever it is necessary to overcome a difference in level, in order to lock the trolley in an inclined position.

In fact, known conveyor belts for this type of application have a plurality of longitudinal ribs disposed at a standard distance from each other so as to create respective grooves. The wheels adapted to lock on these belts have a central body and two identical side bodies or flanges, parallel to each other, disposed on each side of the central body and with a larger diameter than said central body. A hub or pivot is integral with the central body. The two side flanges are mounted rotatably on the hub by means of bearings. The central body is made integral with the trolley, thus fixed, whilst the two flanges can rotate on bearings.

As a result, when the wheel goes onto the belt, the two flanges of the wheel are disposed within two respective grooves of the belt. Consequently, the wheel is lowered with respect to the upper surface of the ribs of the belt and the central body, which is fixed, abuts against the ribs of the belt. In this manner movement of the trolley is prevented, since it rests on the central body which is fixed.

According to the prior art, in order to increase the contact friction between the central body and the ribs of the conveyor belt, the central body has an insert or locking support, having a substantially flat surface destined to abut on the rib of the conveyor, entirely to the advantage of the equilibrium of said trolley.

The central pin has at its ends flat abutment surfaces obtained by milling. The supporting fork has, near the ends of its arms, slots adapted to couple with the millings present on the pin. In this manner, the pin cannot rotate with respect to the fork, thus the central body is integral with the fork.

This type of wheel presents some drawbacks due to the need for additional machining operations to obtain the millings at the ends of the pin and the slots near the ends of the arms of the fork. This further makes it necessary to use special pins and forks which are more costly than standard plastic components available on the market.

Furthermore, it must be considered that the pin is press fitted inside the central body of the wheel. Under an excessive load, the pin-central body coupling could loosen, resulting in rotational release of the central body around the pin. To overcome this drawback, the wheels have, as a further safety device, the addition of the insert with a flat surface on the central body. This clearly complicates production of the central body with consequent higher costs.

In another type of wheel of the prior art, the central body comprises a locking member which protrudes radially therefrom to abut against a protrusion of the supporting fork; in this manner rotation of the central body with respect to the fork is blocked. This system, though being essentially simpler than the preceding one, has some drawbacks. In fact, the locking member of the central body must be of sufficiently strong material to withstand the wear generated by contact with the protrusion of the fork. Furthermore, the protrusion of the fork makes the necessary cleaning operations difficult, because of the build-up of dirt that occurs in the area surrounding the fork.

Other known systems of locking the central body to the fork are in any case based on the same principle as the preceding ones, that is, they have additional external elements which are made integral to the central body of the wheel and interfere with the fork.

DE 2 656 322 B1 describes the preamble of claim 1.

Object of the present invention is to overcome the drawbacks of the prior art, by providing a cheap, easy to produce, versatile wheel with a small number of standard components which do not require costly and delicate processing steps.

A further object of the present invention is to provide a wheel provided with a system of locking onto conveyors that is reliable and effective.

These objects are achieved in accordance with the invention with the characteristics listed in appended independent claim 1.

Advantageous embodiments of the invention are apparent from the dependent claims.

The wheel, particularly for trolleys, according to the invention comprises:
- a central body designed to be made integral with a fork connected to the trolley,
- at least one circular flange mounted rotatably with respect to the central body and protruding radially therefrom to be able to roll on a rolling surface,
- at least one thread guard disposed on a circular flange adapted to protect the rolling surface of the flange from intrusions of foreign bodies. Furthermore, the thread guard comprises internal coupling means adapted to couple with complementary coupling means provided in the central body and external coupling means adapted to couple with arms of the fork so that the central body is made integral with the fork.

The at least one circular flange is of a thickness smaller than the width of the longitudinal grooves defined between the longitudinal ribs of a conveyor belt for trolleys, so as to be able to be accommodated within said longitudinal grooves of the conveyor belt.

An important feature of the invention is represented by the fact that the thread guard is made so as to integrate the rolling pin of the wheel and to constrain the arms of the fork, eliminating the presence of a hub, further machining thereon and other machining on the arms of the fork. Instead, in a castor of the prior art, the thread guard serves only to protect the area comprising the bearings and the rolling pin from the intrusion of foreign bodies.

Furthermore, the shape of the thread guard allows standard forks to be used, without resorting to dedicated products which thus involve additional difficulties and higher costs.

In this manner, the system of locking the trolley on the conveyor belt is simple, cheap, efficient and occupies little space. Furthermore, in the fixed central body there is provided a sector of circumference in which a housing is formed for an insert of plastic or rubber material, able to produce friction on the ribs of the conveyor, providing further locking capability.

Further characteristics of the invention will be made clearer by the detailed description that follows, referring to a purely exemplifying and therefore non-limiting embodiment thereof, illustrated in the appended drawings, in which:
Figure 1 is a side view of a castor wheel assembly, according to the invention;
Figure 2 is an exploded front view of the wheel assembly of figure 1, wherein elements of the wheel, apart from the fork, are shown in axial section;
Figure 3 is an enlarged side view of a thread guard of the wheel of Figure 1 seen from the inwardly facing surface;
Figure 4 is a sectional view of the thread guard taken along the plane IV-IV of figure 3;
Figure 5 is a side view of the central body of the wheel of figure 1:
Figure 6 is an enlarged and partially sectional view taken along the plane VI-VI of the central body of figure 5;
Figure 7 is a side view from the outside of a flange of the wheel of figure 1;
Figure 8 is a side view from the inside of the flange of figure 7; and
Figure 9 is a diagrammatic, partially sectional front view, illustrating the coupling between the wheel of figure 1 and a partially broken away conveyor belt, wherein the fork of the wheel is not shown for the sake of clarity of the figure.

The wheel according to the invention, designated as a whole with reference 1, is described with the aid of the figures.

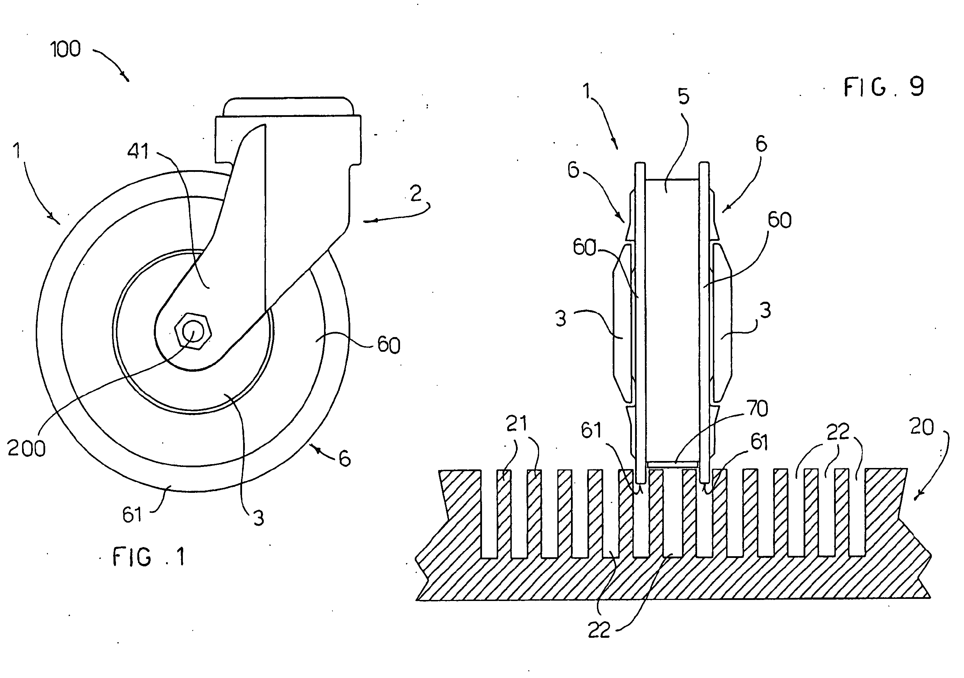

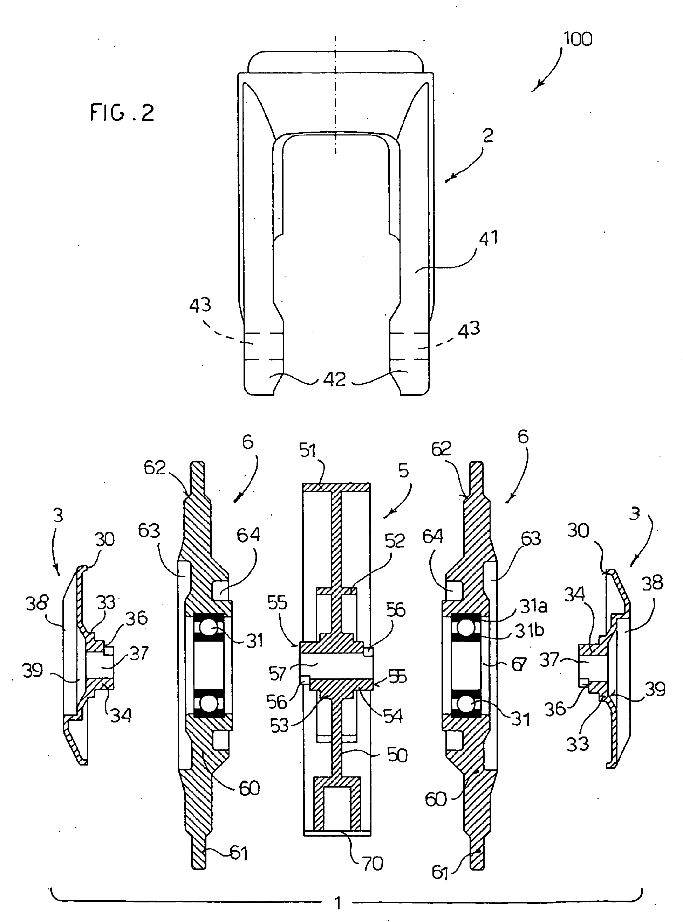

With reference for now to Figures 1 and 2, the castor wheel assembly 100 comprises a wheel proper one is supported by a fork 2, mounted rotatably around a vertical axis by means of a ball-bearing (not shown).

The fork comprises two arms 41 which have, at their free ends, two truncated conical surfaces 42 protruding axially towards the inside of the arms and provided with holes 43 to receive a screw 200 (Figure 1).

Even if in the figures a castor wheel 100 has been illustrated, said wheel can also be made one-way by means of per se known locking systems, adapted to lock the fork 2.

With particular reference to figure 2, the wheel 1 comprises a fixed central body 5 disposed between two lateral flanges 6, free or idle, with a larger diameter than said central body and two thread guards 3 applied to the outer surface of the flanges to prevent threads or other dirt from getting tangled.

With reference to Figures 2, 5 and 6, the central body has a substantially discoid shape, and comprises a disc 50. On the edge of the disc 50 is provided a peripheral circumferential rib 51 which extends on both sides; in this manner, the central body has a substantially "double T-shaped" section (Figure 2).

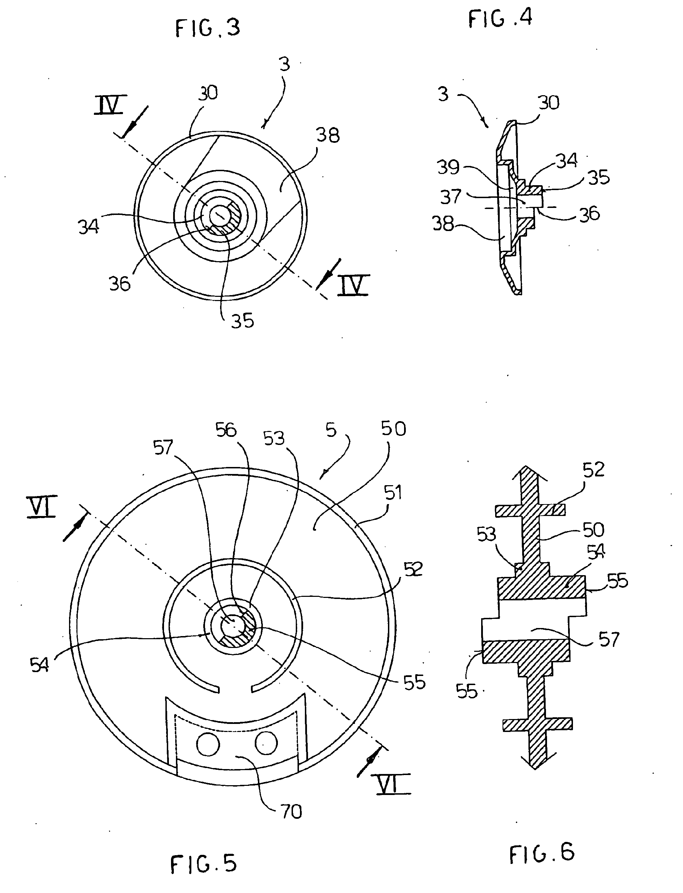

The central disc 50 has an axial hole 57. A cylindrical tang 54 is provided around the axial hole 57. A collar 53 is provided around the cylindrical tang 54. On the cylindrical collar 54 is provided a semi-cylindrical portion 55 (shown shaded in Figure 5) which protrudes axially so as to define two abutment surfaces 56.

A second circular rib 52 is provided between the collar 53 and the peripheral rib 51. The central body also has a circumferential dividing wall within which is obtained a seat for a friction insert 70 serving as a locking support. The friction insert is advantageously fixed removably, through a snap coupling. In this manner, the replacement operation is made particularly easy.

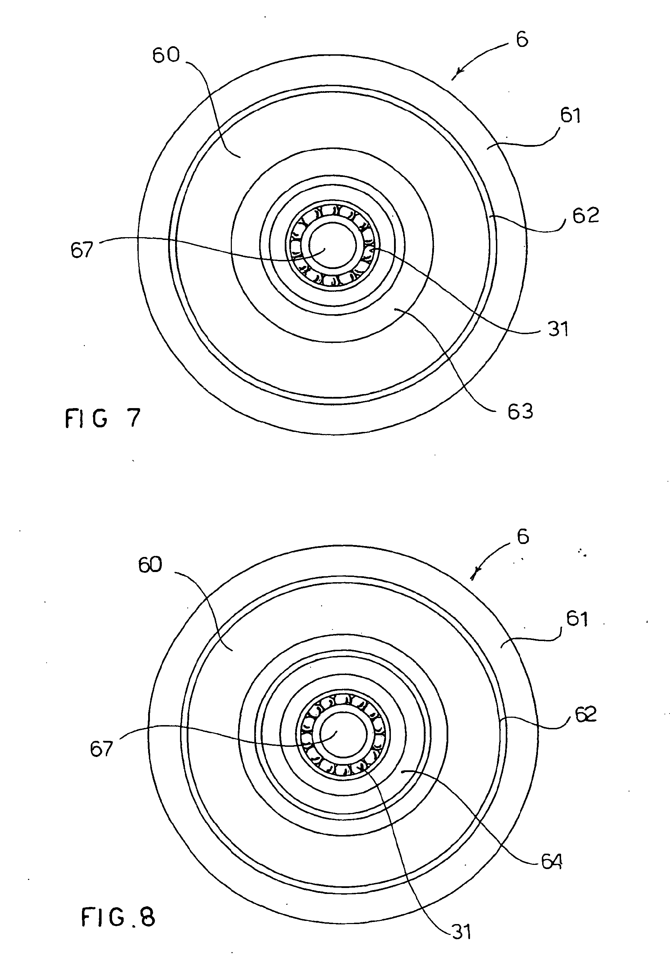

With reference to Figures 1, 2, 7 and 8, each flange 6 comprises a substantially discoid body 60. A peripheral portion 61 with a smaller thickness comprising a circumferential edge which defines the rolling surface is connected to the body 60 of the flange 6.

A seat 63 adapted to accommodate the thread guard 3 is formed on the outer surface of the body 60 of the flange 6. A circular groove 64 adapted to accommodate the intermediate rib 52 of the central body 5 is formed on the inside surface of the body of the flange.

With reference to Figures 2, 3 and 4, each thread guard 3 has a discoid shaped body and is provided with a central hole 37. The body of the thread guard has a peripheral rib 30 facing inward to engage in the circular seat 63 of the flange 6. On the outside surface of the body of the thread guard are formed recesses 38 having a shape adapted to house the arms 41 of the fork 2 in a substantially snap coupling. Inside said recesses 38, around the central hole 37, there is further present a flared surface 39 adapted to house the truncated conical part 42 of the arms 41 of the fork 2.

Around the axial hole 37 of the thread guard is provided a cylindrical tang 34 which extends inwardly. A collar 33 destined to abut against the inner ring 31b of the bearing 31 of the flanges 6 is obtained around the cylindrical tang 34. On the cylindrical tang 34 is provided a semi-cylindrical portion 35 (shown shaded in Figure 3) which protrudes axially so as to engage in the inner ring 31 a of the bearing 31. The semi-cylindrical portion 35 is defined by two abutment surfaces 36 which are destined to abut to the abutment surfaces 56 of the semi-cylindrical portion of the central body.

All components of the wheel 1, that is to say the fork 2, the central body 5, the flanges 6 and the thread guards 3 are formed by injection moulding of plastic materials, and do not require further successive machining operations, so as to ensure ease of assembly and high versatility.

Assembly of the wheel assembly 100 is described hereunder, with particular reference to Figure 2.

The bearings 31 are mounted on two flanges 6. Each flange 6 abuts on the side surface of the central body 5, so that the semi-cylindrical part 55 of the tang 54 of the central body engages in the inner ring 31b of the respective bearing.

The rib 52 of the central body engages in the groove 64 of the respective flange 6, so as to guide centring of the flanges with respect to the central body.

The thread guards 3 are disposed in the respective seat 63 of the flange 6. The semi-cylindrical part 35 of the tang 34 of the thread guard 3 engages inside the inner ring 31 b of the respective bearing, until it abuts against the tang 54 of the central body 5. The abutment surfaces 36 of the semi-cylindrical portion 35 of the thread guards 3 abut against the abutment surfaces 56 of the semi-cylindrical portion 55 of the central body.

The arms 41 of the fork 2 are disposed in the respective seats 38 of the thread guard 3 so that the frusto-conical parts 42 of the arms engage in the flared seats 39 of the thread guards. A screw or bolt 200 (Figure 1) is inserted into the holes 43 of the arms of the fork, into the holes 37 of the thread guards and into the hole 57 of the central body. The screw 200 is locked by a nut.

In this manner the central body 5 is made integral with the thread guards 3 which in turn are made integral with the arms of the fork 2.

The thread guards 3 and the central body 5 are thus fixed with respect to the flanges 6, allowing rotation of the wheel 1 and, advantageously, the semi-cylindrical portion 55 of the central body 5 and the corresponding semi-cylindrical portion 35 of the thread guards 3 when they abut against each other by means of the surfaces 56 and 36, constitute a pivot for the wheel 1.

With reference to Figure 9, the wheel 1 is destined to be conveyed by a conveyor belt 20. The conveyor belt 20 has a plurality of longitudinal ribs 21 which define a plurality of longitudinal grooves 22 in a square-wave configuration, in cross section.

The width of said longitudinal grooves 22 is such that the edges of the peripheral parts 61 of the flanges 6 of the wheel 1 can be accommodated therein.

Furthermore, the friction insert 70 of the central body of the wheel 1 rests on the grooves 21 of said conveyor 20; in this manner the central body is blocked on the rib 21 of the conveyor, preventing any movement of the trolley.

Numerous changes and modifications of detail within the reach of a person skilled in the art can be made to the present embodiment of the invention without thereby departing from the scope of the invention as set forth in the appended claims.

## Claims

1. A wheel (1) particularly for trolleys comprising:
- a central body (5) destined to be made integral with a fork (2) connected to a trolley,
- at least one circular flange (6), mounted rotatably with respect to the central body and protruding radially therefrom to be able to roll on a rolling surface, said at least one circular flange (6) having a thickness smaller than the width of the longitudinal grooves (22) defined between longitudinal ribs (21) of a conveyor belt (20) for trolleys,
- at least one thread guard (3) disposed on said circular flange to protect the rolling surface of the flange from intrusions of foreign bodies,
**characterised in that** said at least one thread guard (3) further comprises internal coupling means (35, 36) adapted to couple with complementary coupling means (55, 56) provided in said central body (5) and external coupling means (38, 39) adapted to couple with arms (41) of said fork (2) so that the central body is made integral with the fork.

2. A wheel (1) according to claim 1, **characterised in that** said coupling means (35, 36) of the thread guard (3) and said coupling means (55, 56) of the central body (5) comprise a semi-cylindrical portion (35, 55) disposed on a cylindrical tang (34, 54) so as to define abutment surfaces (36, 56) which abut reciprocally to prevent rotation of the thread guard (3) with respect to the central body (5).

3. A wheel (1) according to the preceding claim, **characterised in that** said semi-cylindrical portions (35, 55) belonging respectively to the thread guard (3) and to the central body (5) essentially snap couple to each other, so as to form a horizontal pivot around which said flange (6) can rotate.

4. A wheel (1) according to any one of the preceding claims, **characterised in that** said external coupling means (38, 39) of the thread guard (3) comprise a recess (38) defining a substantially U-shaped seat and a flared surface (39) adapted to house respectively a side portion of the arms (41) of the fork (2) and parts (42) protruding inwardly from the arms (41) of the fork to constrain the fork (2) to the thread guard (3) with substantially snap coupling.

5. A wheel (1) according to one of claims 2 to 4, **characterised in that** said flange (6) comprises a central hole (57) wherein is mounted the external ring (31a) of ballbearing (31), the inner ring (31b) of said bearing being locked on said semi-cylindrical portions (35, 55) of the tangs of the central body and of the thread guard so as to allow the flange (6) to rotate freely with respect to the central body (5) and to the thread guard (3).

6. A wheel (1) according to any one of claims 2 to 5, **characterised in that** the tangs (34, 54) of the central body (5) and of the thread guard (3) have axial holes (37, 57) adapted to allow the passage of a fixing screw (200) fixed in the vicinity of the free ends of the arms (41) of the fork (2).

7. A wheel (1) according to any one of the preceding claims, **characterised in that** said central body (5) comprises:
- a peripheral rib (51) wherein is accommodated a tapered surface (62) of the flange (6), and
- an intermediate circular rib (52) adapted to be accommodated inside a circular groove (64) of the flange (6) so as to guide rotation of the flange with respect to the central body.

8. A wheel (1) according to any one of the preceding claims, **characterised in that** said flanges (6) have a peripheral edge (61) having such a thickness as to enter into the grooves (22) of the conveyor (20).

9. A wheel (1) according to any one of the preceding claims, **characterised in that** said central body (5) comprises a locking support (70) destined to be disposed between the central body (5) of the wheel and the upper part of the ribs (21) of the conveyor belt (20).

10. A wheel (1) according to any one of the preceding claims, **characterised in that** the fork (2), the thread guards (3), the flanges (6) and the central body (5) are obtained by injection moulding of plastic material.

11. A wheel (1) according to any one of the preceding claims, **characterised in that** said fork is mounted rotatably around a vertical axis, so as to make the wheel (1) a castor wheel.

12. A trolley **characterised in that** it comprises at least one wheel (1) according to any of the preceding claims.

## Patentansprüche

1. Rad (1) insbesondere für Einkaufswagen, umfassend:
- einen mittigen Körper (5), der dazu bestimmt ist, einstückig mit einer Gabel (2) gemacht zu werden, die mit einem Einkaufswagen verbunden ist,
- mindestens einen Rundflansch (6), der drehbar in Bezug auf den mittigen Körper montiert ist und radial davon vorsteht, um auf einer Rollfläche zu rollen, wobei der mindestens eine Rundflansch (6) eine Dicke aufweist, die kleiner als die Breite der Längsrillen (22) ist, die zwischen Längsrippen (21) eines Förderbandes (20) für Einkaufswagen definiert ist,
- mindestens einen Gewindeschützer (3) der auf dem Rundflansch angeordnet ist, um die Rollfläche des Flansches vor dem Eindringen von Fremdkörpern zu schützen,
**dadurch gekennzeichnet, dass** der Gewindeschützer (3) ferner innere Koppelmittel (35, 36), die so ausgelegt sind, dass sie mit komplementären Koppelmitteln (55, 56) koppeln, die im mittigen Körper (5) vorgesehen sind, und äußere Koppelmittel (38, 39) umfasst, die so ausgelegt sind, dass sie mit Armen (41) der Gabel (2) koppeln, so dass der mittige Körper einstückig mit der Gabel gemacht ist.

2. Rad (1) nach Anspruch 1, **dadurch gekennzeichnet, dass** die Koppelmittel (35, 36) des Gewindeschützers (3) und die Koppelmittel (55, 56) des mittigen Körpers (5) einen halbkreisförmigen Abschnitt (35, 55) umfassen, der auf einem zylindrischen Dorn (34, 54) angeordnet ist, um Stoßflächen (36, 56) zu definieren, welche wechselseitig aneinander stoßen, um Drehung des Gewindeschützers (3) in Bezug auf den mittigen Körper (5) zu verhindern.

3. Rad (1) nach dem vorhergehenden Anspruch, **dadurch gekennzeichnet, dass** die halbkreisförmigen Abschnitte (35, 55), die zum Gewindeschützer (3) bzw. zum mittigen Körper (5) gehören, im Wesentlichen eine Schnappkopplung miteinander eingehen, um eine horizontale Drehachse zu bilden, um die sich der Flansch (6) drehen kann.

4. Rad (1) nach einem der vorhergehenden Ansprüche, **dadurch gekennzeichnet, dass** die äußeren Koppelmittel (38, 39) des Gewindeschützers (3) eine Aussparung (38), die einen im Wesentlichen U-förmigen Sitz definiert, und eine aufgebördelte Fläche (39) umfassen, die so ausgelegt ist, dass sie jeweils einen Seitenabschnitt der Arme (41) der Gabel (2) und Teile (42) aufnimmt, die von den Armen (41) der Gabel nach innen vorstehen, um die Gabel (2) im Wesentlichen mit Schnappkupplung an den Gewindeschützer (3) zwingen.

5. Rad (1) nach einem der Ansprüche 2 bis 4, **dadurch gekennzeichnet**, das der Flansch (6) ein mittiges Loch (57) aufweist, worin der äußere Ring (31a) eines Kugellagers (31) montiert ist, wobei der innere Ring (31b) des Lagers auf den halbkreisförmigen Abschnitten (35, 55) der Dorne des mittigen Körpers und des Gewindeschützers (6) verriegelt ist, damit sich der Flansch (6) in Bezug auf den mittigen Körper (5) und den Gewindeschützer (3) frei drehen kann.

6. Rad (1) nach einem der Ansprüche 2 bis 5, **dadurch gekennzeichnet, dass** die Dorne (34, 54) des mittigen Körpers (3) und des Gewindeschützers (3) axiale Löcher (37, 57) aufweisen, die so ausgelegt sind, dass sie den Durchtritt einer Feststellschraube (200) ermöglichen, die in der Nachbarschaft der freien Enden der Arme (41) der Gabel (2) fixiert ist.

7. Rad (1) nach einem der vorhergehenden Ansprüche, dass der mittige Körper (5) umfasst:
- eine Umfangsrippe (51), worin eine konisch zulaufende Fläche (62) des Flansches (6) aufgenommen ist, und
- eine kreisförmige Zwischenrippe (52), die so ausgelegt ist, dass sie innerhalb einer kreisförmigen Rille (64) des Flansches (6) untergebracht ist, um Drehung des Flansches in Bezug auf den mittigen Körper zu führen.

8. Rad (1) nach einem der vorhergehenden Ansprüche, **dadurch gekennzeichnet, dass** die Flansche (6) eine Umfangskante (61) mit solch einer Dicke aufweisen, dass sie in die Rillen (22) des Förderers (20) eintreten.

9. Rad (1) nach einem der vorhergehenden Ansprüche, **dadurch gekennzeichnet, dass** der mittige Körper (5) eine Sperrstütze (70) umfasst, die dazu bestimmt ist, zwischen dem mittigen Körper (5) des Rades und dem oberen Teil der Rippen (21) des Förderbandes (20) angeordnet zu werden.

10. Rad (1) nach einem der vorhergehenden Ansprüche, **dadurch gekennzeichnet, dass** die Gabel (2), die Gewindeschützer (3), die Flansche (6) und der mittige Körper (5) durch Spritzgießen von Kunststoffmaterial erhalten sind.

11. Rad (1) nach einem der vorhergehenden Ansprüche, **dadurch gekennzeichnet, dass** die Gabel drehbar um eine vertikale Achse montiert ist, um aus dem Rad (1) eine Lenkrolle zu machen.

12. Einkaufswagen, **dadurch gekennzeichnet, dass** er mindestens ein Rad (1) nach einem der vorhergehenden Ansprüche umfasst.

## Revendications

1. Roue (1) notamment pour trolleys comprenant :
- un corps central (5) destiné à être fabriqué en un seul tenant avec une fourche (2) raccordée à un trolley,
- au moins une bride circulaire (6), montée rotativement par rapport au corps central et dépassant radialement de celui-ci afin d'être en mesure de rouler sur une surface de roulement, ladite au moins une bride circulaire (6) ayant une épaisseur plus petite que la largeur des gorges longitudinales (22) définies entre des nervures longitudinales (21) d'une courroie transporteuse (20) pour trolleys,
- au moins un pare-fils (3) disposé sur ladite bride circulaire afin de protéger la surface de roulement de la bride contre les intrusions de corps étrangers,
**caractérisée en ce que** ledit au moins un pare-fils (3) comprend en outre un moyen de couplage interne (35,36) adapté afin de s'accoupler à un moyen de couplage complémentaire (55,56) prévu dans ledit corps central (5) et un moyen de couplage externe (38,39) adapté afin de s'accoupler à des bras (41) de ladite fourche (2) de sorte que le corps central soit fabriqué en un seul tenant avec la fourche.

2. Roue (1) selon la revendication 1, **caractérisée en ce que** ledit moyen de couplage (35,36) du pare-fils (3) et ledit moyen de couplage (55,56) du corps central (5) comprennent une portion semi-cylindrique (35,55) disposée sur un tenon cylindrique (34,54) de manière à définir des surfaces de butée (36,56) qui butent mutuellement l'une contre l'autre afin d'empêcher une rotation du pare-fils (3) par rapport au corps central (5).

3. Roue (1) selon la revendication précédente, **caractérisée en ce que** lesdites portions semi-cylindriques (35,55) appartenant respectivement au pare-fils (3) et au corps central (5) s'accouplent essentiellement par encliquetage l'une à l'autre, de manière à former un pivot horizontal autour duquel ladite bride (6) peut tourner rotativement.

4. Roue (1) selon une quelconque des revendications précédentes, **caractérisée en ce que** ledit moyen d'accouplement externe (38,39) du pare-fils (3) comprend un évidement (38) définissant une assise substantiellement en forme de U et une surface évasée (39) adaptée afin de renfermer respectivement une portion latérale des bras (41) de la fourche (2) et des parties (42) dépassant vers l'intérieur à partir des bras (41) de la fourche afin de contraindre la fourche (2) vers le pare-fils (3) avec un accouplement substantiellement par encliquetage.

5. Roue (1) selon une des revendications 2 à 4, **caractérisée en ce que** ladite bride (6) comprend un trou central (57), dans lequel est montée la bague externe (31a) du roulement à billes (31), la bague interne (31b) dudit roulement étant verrouillée sur lesdites portions semi-cylindriques (35,55) des tenons du corps central et du pare-fils de manière à permettre à la bride (6) de tourner rotativement librement par rapport au corps central (5) et au pare-fils (3).

6. Roue (1) selon une quelconque des revendications 2 à 5, **caractérisée en ce que** les tenons (34,54) du corps central (5) et du pare-fils (3) ont des trous axiaux (37,57) adaptés afin de permettre le passage d'une vis de fixation (200) fixée à proximité des extrémités libres des bras (41) de la fourche (2).

7. Roue (1) selon une quelconque des revendications précédentes, **caractérisée en ce que** ledit corps central (5) comprend :
- une nervure périphérique (51) dans lequel est renfermée une surface conique (62) de la bride (6), et
- une nervure circulaire intermédiaire (52) adaptée afin d'être renfermée à l'intérieur d'une gorge circulaire (64) de la bride (6) de manière à guider la rotation de la bride par rapport au corps central.

8. Roue (1) selon une quelconque des revendications précédentes, **caractérisée en ce que** lesdites brides (6) ont un bord périphérique (61) ayant une épaisseur telle qu'il pénètre dans les gorges (22) de la courroie transporteuse (20).

9. Roue (1) selon une quelconque des revendications précédentes, **caractérisée en ce que** ledit corps central (5) comprend un support de verrouillage (70) destiné à être disposé entre le corps central (5) de la roue et la partie supérieure des nervures (21) de la courroie transporteuse (20).

10. Roue (1) selon une quelconque des revendications précédentes, **caractérisé en ce que** la fourche (2), les pare-fils (3), les brides (6) et le corps central (5) sont obtenus par moulage par injection de plastique.

11. Roue (1) selon une quelconque des revendications précédentes, **caractérisée en ce que** ladite fourche est montée rotativement autour d'un axe vertical, de manière à faire de la roue (1) une roulette pivotante.

12. Trolley **caractérisé en ce qu'**il comprend au moins une roue (1) selon une quelconque des revendications précédentes.
